# FASCICULE DE BREVET EUROPEEN

(11) **EP 3 219 998 B1**
(45) Date de publication et mention de la délivrance du brevet: **02.01.2019**
(21) Numéro de dépôt: 17157867.7
(22) Date de dépôt: 24.02.2017
(51) Int. Cl.: F16D 21/06, F16D 25/08

(54) **MECANISME D' EMBRAYAGE ET PROCEDE D' ASSEMBLAGE D' UN TEL MECANISME SUR UNE CHAÎNE DE TRANSMISSION**
KUPPLUNGSMECHANISMUS UND VERFAHREN ZUR MONTAGE EINES SOLCHEN MECHANISMUS AUF EINE ÜBERTRAGUNGSKETTE
CLUTCH MECHANISM AND METHOD OF ASSEMBLING SUCH A MECHANISM ON A TRANSMISSION CHAIN

(30) Priorité: 16.03.2016 FR 1652228
(43) Date de publication de la demande: 20.09.2017
(73) Titulaire: Valeo Embrayages, 80009 Amiens Cedex 2 (FR)
(72) Inventeur: DOLE, Arnaud, 80800 Marcelcave (FR); THIBAUT, François, 80330 Longueau (FR)
(74) Mandataire: Cardon, Nicolas

(56) Documents cités:
- DE-A1-102010 051 447
- DE-A1-102010 051 911
- DE-A1-102011 115 227
- DE-A1-102014 209 618

## Description

### Domaine technique

La présente invention concerne un mécanisme d'embrayage, et plus particulièrement un dispositif et un procédé d'assemblage d'un tel mécanisme d'embrayage sur une chaine de transmission. Elle se situe dans le domaine de la transmission notamment pour véhicules automobiles.

### État de la technique antérieure

On connait de l'art antérieur des mécanismes d'embrayage comprenant :
- un moyeu d'entrée moteur, pouvant être raccordé à un arbre d'entrée moteur par l'intermédiaire notamment d'un amortisseur torsionnel et/ou d'une plaque flexible,
- un moyeu de sortie pouvant être connecté à une transmission, et notamment à un arbre d'une boite de vitesses,
- un embrayage multidisques comprenant :
   - une pluralité de premiers éléments de friction liés solidairement en rotation à l'arbre d'entrée par l'intermédiaire d'un porte-disques d'entrée et du moyeu d'entrée,
   - une pluralité de deuxièmes éléments de friction liés solidairement en rotation à l'arbre de sortie par l'intermédiaire d'un porte-disques de sortie et du moyeu de sortie,
- un système de commande comprenant un carter et un actionneur agencé pour configurer l'embrayage dans une position comprise entre :
   - une position embrayée pour laquelle la pluralité des premiers éléments de friction de l'embrayage est couplée en rotation à la pluralité des deuxièmes éléments de friction dudit embrayage, et
   - une position débrayée pour laquelle la pluralité des premiers éléments de friction de l'embrayage est découplée en rotation à la pluralité des deuxièmes éléments de friction dudit embrayage.

L'inconvénient des mécanismes d'embrayage connus est qu'il n'est pas facile de les assembler avec d'autres éléments de la chaîne de transmission, et notamment dans le carter d'une boite de vitesse. Plus particulièrement, un assemblage monobloc de tels mécanismes d'embrayage imposent souvent des moyens spécifiques de fixation sur le carter d'une boite de vitesses par exemple. Ces moyens spécifiques de fixation sont généralement encombrants radialement car ils doivent être radialement situés à l'extérieur du mécanisme d'embrayage afin de permettre à l'opérateur réalisant l'assemblage d'avoir accès auxdits moyens de fixations.

Il est ainsi nécessaire d'imaginer des solutions particulières pour chaque association d'embrayage avec un élément de la chaîne de transmission, par exemple une boite de vitesses, rendant leurs intégrations coûteuses et souvent complexes.

Il existe ainsi un besoin croissant dans le domaine automobile de standardisation des sous-ensembles et, le cas échéant, de trouver des solutions suffisamment versatiles pour permettre d'assembler entre eux des sous-ensembles existants. Plus particulièrement, il existe un besoin pour proposer des solutions économiques et standardisables d'assemblage d'un mécanisme d'embrayage sur une chaîne de transmission en deux étapes : la première étape comprenant l'assemblage du système de commande sur la chaîne de transmission, et la seconde étape comprenant l'assemblage de l'embrayage sur le système de commande.

La présente invention a pour objet de répondre au moins en grande partie aux problèmes précédents et de conduire en outre à d'autres avantages.

Un autre but de l'invention est de résoudre au moins un de ces problèmes par un nouveau mécanisme d'embrayage.

Un autre but de la présente invention est de réaliser à moindre coût l'assemblage d'un embrayage sur une chaîne de transmission en deux étapes.

Un autre but de la présente invention est de réduire la masse d'un embrayage et de standardiser son assemblage sur une grande variété de chaînes de transmission.

### Exposé de l'invention

Selon un premier aspect de l'invention, on atteint au moins l'un des objectifs précités avec un mécanisme d'embrayage tel que définit dans la revendication 1.

Ainsi, comme le moyen de couplage en rotation est distinct du système de blocage axial, il est possible de réaliser astucieusement l'assemblage du mécanisme d'embrayage selon le premier aspect de l'invention sur une chaîne de transmission en deux étapes : au cours d'une première étape, le système de commande est au moins axialement bloqué entre la transmission et l'arbre de transmission puis, au cours d'une seconde étape, le système de commande est au moins couplé en rotation au sous-ensemble, et plus particulièrement au support d'embrayage. En d'autres termes, l'invention conforme à son premier aspect permet d'assembler d'abord le système de commande sur la transmission puis de lier axialement et/ou radialement ledit système de commande au sous-ensemble comportant le mécanisme d'embrayage et le support d'embrayage. L'assemblage d'un tel mécanisme d'embrayage sur une chaîne de transmission est ainsi simplifié, et les coûts de mise en oeuvre et de maintenance sont réduits car il est possible de fournir séparément le système de commande d'une part et l'embrayage d'autre part. La différentiation du système de blocage axial et du moyen de couplage en rotation permet de plus de les rendre compatibles avec de très nombreux mécanismes d'embrayage.

Le support d'embrayage est agencé pour transmettre un effort axial généré au niveau de l'au moins un piston annulaire, notamment lorsque ce dernier se déplace axialement pour embrayer l'embrayage. Pour ce faire, le support d'embrayage est bloqué axialement, au moins lors du montage, dans une position comprise axialement entre le système de commande et le moyeu de sortie de l'embrayage.

Du côté du moyeu de sortie et du moteur, le support d'embrayage est axialement bloqué par le deuxième élément de blocage axial, ledit deuxième élément de blocage axial étant disposé préférentiellement axialement du côté opposé au piston annulaire par rapport à l'embrayage.

Le support d'embrayage est préférentiellement en appui indirect sur le deuxième élément de blocage axial. Toutes les pièces intermédiaires entre le support d'embrayage et le deuxième élément de blocage axial sont avantageusement agencées pour pouvoir transmettre un effort axial. A minima, elles sont assemblées sans jeu entre elles au moment du montage.

De plus, le support d'embrayage est agencé pour supporter radialement le poids de l'embrayage, par l'intermédiaire d'un palier à roulements, et plus particulièrement du type d'un palier à roulements oblique afin de pouvoir transmettre à la fois un effort radial et un effort axial.

Le palier à roulements est arrêté axialement par un anneau d'arrêt disposé du côté opposé à l'effort axial exercé par le piston annulaire. En d'autres termes, l'anneau d'arrêt est situé axialement entre le palier à roulements et le moyeu de sortie de l'embrayage.

Radialement, le palier à roulements est disposé entre le support d'embrayage et l'embrayage.

Le mécanisme d'embrayage conforme au premier aspect de l'invention comprend préférentiellement un embrayage du type humide ou sec.

De manière avantageuse, le mécanisme conforme au premier aspect de l'invention comprend deux embrayages multidisques, préférentiellement du type humide, le système de commande comprenant un premier et un deuxième pistons annulaires, agencés respectivement pour coupler ou découpler le premier et le deuxième embrayage sur un premier ou un deuxième arbre de la transmission par l'intermédiaire d'un premier et deuxième moyeu de sortie.

Chaque embrayage multidisques comprend d'une part une pluralité de premiers éléments de friction, tels que par exemple des disques de friction, liés solidairement en rotation à l'arbre d'entrée par l'intermédiaire d'un porte-disques d'entrée et d'un moyeu d'entrée, et d'autre part une pluralité de deuxièmes éléments de friction, tels que par exemples des flasques, liés solidairement en rotation à au moins l'un des arbres de transmission par l'intermédiaire d'un premier ou deuxième organe de transmission de force et d'un premier ou deuxième moyeu de sortie.

Les premier et deuxième organes de transmission de force sont agencés pour transmettre un effort axial généré par les premier et deuxième pistons annulaires du système de commande aux deuxièmes éléments de friction.

Alternativement, la pluralité de flasques est liée en rotation à au moins l'un des arbres de transmission par l'intermédiaire du premier ou deuxième organe de transmission de force et d'un premier ou deuxième moyeu de sortie et la pluralité de disques de friction est liée en rotation à l'arbre d'entrée par l'intermédiaire d'un porte-disques d'entrée et d'un moyeu d'entrée.

Le système de commande est agencé pour configurer chaque embrayage dans une position comprise entre :
- une position embrayée pour laquelle la pluralité des premiers éléments de friction est couplée en rotation à la pluralité des deuxièmes éléments de friction, et
- une position débrayée pour laquelle la pluralité des premiers éléments de friction est découplée en rotation à la pluralité des deuxièmes éléments de friction.

Chaque embrayage est préférentiellement configuré dans une position différente de l'autre : si le premier embrayage est configuré dans la position embrayée, alors le deuxième embrayage est préférentiellement configuré dans la position débrayée ; et si le premier embrayage est configuré dans la position débrayée, alors le deuxième embrayage est préférentiellement configuré dans la position embrayée.

Éventuellement, les premier et deuxième embrayages peuvent simultanément être configurés dans la position débrayée.

De manière avantageuse, dans un mécanisme d'embrayage conforme au premier aspect de l'invention, le système de commande est préférentiellement du type hydraulique ou pneumatique, le piston annulaire étant monté axialement coulissant sur le carter.

Le piston se déplace axialement par rapport au carter de manière à embrayer ou débrayer l'embrayage correspondant, par exemple par un couplage frictionnel au niveau des premiers et deuxièmes éléments de friction de l'embrayage, menant finalement à un couplage en rotation de l'arbre d'entrée avec un des arbres de la transmission.

Dans la suite de la description et dans les revendications, on utilisera à titre non limitatif et afin d'en faciliter la compréhension, les termes :
- « avant » ou « arrière » selon la direction par rapport à une orientation axiale déterminée par l'axe O principal de rotation du système de transmission, « l'arrière » désignant la partie située à droite des figures, du côté de la transmission, et « l'avant » désignant la partie gauche des figures, du côté du moteur ; et
- « intérieur / interne » ou « extérieur / externe » par rapport à l'axe O et suivant une orientation radiale, orthogonale à ladite orientation axiale.

De manière préférentielle, un mécanisme conforme au premier aspect de l'invention peut comprendre alternativement ou complémentairement au moins un des premiers perfectionnements ci-dessous pris éventuellement en combinaison :
- le système de blocage axial est en liaison directe avec la transmission, le premier élément de blocage axial comprenant au moins un contact direct avec une ou plusieurs faces de ladite transmission. Le premier élément de blocage axial peut consister notamment en un élément d'arrêt axial agencer pour empêcher un mouvement vers l'arrière de la transmission par rapport au système de commande ;
- le premier élément de blocage axial est agencé pour réaliser un appui plan avec la transmission, préférentiellement, le premier élément de blocage axial comprend une face d'appui située sur le carter du système de commande et en regard de la transmission. Préférentiellement, la face d'appui du premier élément de blocage axial est plane et agencée pour venir en appui sur une face complémentaire de la transmission, la face d'appui du premier élément de blocage axial pouvant être située sur une face arrière du carter ;
- le système de commande peut être avantageusement lié de manière amovible à la transmission par l'intermédiaire de moyens de fixation réalisant au moins un blocage en rotation vis-à-vis de la transmission, et complémentairement ou alternativement un blocage axial ou un arrêt axial ;
- le système de blocage axial est éventuellement agencé pour empêcher tout mouvement relatif axial entre le système de commande et la transmission, vers l'avant et/ou vers l'arrière. En d'autres termes, le premier élément de blocage axial est agencé pour réaliser un blocage axial entre le système de commande et la transmission ;

De manière complémentaire ou alternative, un mécanisme conforme au premier aspect de l'invention ou à l'un quelconque de ses premiers perfectionnements peut comprendre alternativement ou complémentairement au moins un des deuxièmes perfectionnements ci-dessous pris éventuellement en combinaison :
- du côté de l'arbre de la transmission, le deuxième élément de blocage axial peut être agencé pour réaliser un arrêt axial afin d'empêcher un mouvement vers l'avant du mécanisme d'embrayage, qui le désolidariserait du système de commande et plus particulièrement du piston annulaire. Dans ce cas, les éléments intermédiaires situés entre l'arbre de transmission et le système de commande forment collectivement une chaîne axialement solidaire par l'intermédiaire de liaisons toutes agencées pour reprendre un effort axial exercé par un des pistons annulaires entre ledit arbre de transmission et ledit système de commande ;
- le deuxième élément de blocage axial peut être agencé pour empêcher tout mouvement relatif axial entre le système de commande et un arbre de la transmission et/ou un arbre d'entrée moteur ;
- du côté de l'arbre de la transmission, le deuxième élément de blocage axial du système de blocage axial, le moyeu de sortie de l'au moins un embrayage et le support d'embrayage sont ainsi agencés pour transmettre un effort axial. Préférentiellement, un palier à roulement est interposé entre le moyeu de sortie de l'embrayage et le support d'embrayage et éventuellement entre chaque moyeu de sortie des embrayages. Plus particulièrement, un palier à aiguilles est disposé entre le moyeu de sortie de l'embrayage et le support d'embrayage et éventuellement entre chaque moyeu de sortie des embrayages ;
- Avantageusement, le premier moyeu de sortie de l'embrayage est en appui direct sur le deuxième élément de blocage axial ;
- le support d'embrayage est en appui axial avec le système de commande, permettant ainsi de transmettre un effort axial vers l'arrière entre ledit support d'embrayage et ledit système de commande ;
- le deuxième élément de blocage axial du système de blocage axial est disposé sur l'au moins un arbre de la transmission et situé devant le moyeu de sortie d'au moins un embrayage. Il comprend préférentiellement un élément d'arrêt axial agencé pour transmettre un effort axial vers l'avant entre ledit moyeu de sortie et ledit arbre de transmission. Sa position avantageuse à l'extrémité de la chaîne d'effort et sur l'arbre de transmission permet ainsi d'accéder facilement au système de blocage axial lorsque la transmission, et notamment la boite de vitesses, est désassemblée du moteur. D'une manière générale, le deuxième élément de blocage axial est en appui axial sur l'arbre de la transmission et sur le moyeu de sortie de l'embrayage ;
- le deuxième élément de blocage du système de blocage axial comprend un élément du type anneau d'arrêt ;
- le deuxième élément de blocage du système de blocage axial est logé dans une gorge située sur l'au moins un arbre de la transmission ;
- le deuxième élément de blocage du système de blocage axial comprend en outre une cale. Les dimensions axiales de la cale sont ajustées de manière à permettre un montage sans jeu axial du mécanisme d'embrayage sur la chaîne de transmission, ou éventuellement avec un jeu minimal. Plus particulièrement, la cale est agencée pour qu'il n'y ait pas de jeu axial entre la transmission et l'arbre de transmission, notamment au montage, ou éventuellement un jeu fonctionnel minimal, notamment dans la configuration embrayée de l'embrayage. L'utilisation d'une cale permet de rendre compatible ledit mécanisme d'embrayage avec n'importe quel système de transmission, le blocage axial étant assuré au cas par cas par la cale et par l'élément d'arrêt axial. La cale peut être fabriquée facilement et à moindre coût, et insérée facilement sur la chaîne de transmission ;
- la cale est interposée entre le deuxième élément de blocage du système de blocage axial et l'au moins un moyeu de sortie. Plus spécifiquement, la cale est par exemple interposée axialement entre l'anneau d'arrêt et le moyeu de sortie. Montée sur un arbre de transmission, la cale peut ainsi être facilement intégrée sur la chaîne de transmission. Afin de faciliter son montage, un alésage est astucieusement réalisé sur un moyeu d'entrée du mécanisme d'embrayage. Les dimensions radiales de l'alésage sont telles qu'un espace non nul subsiste entre le deuxième élément de blocage du système de blocage axial et/ou la cale et l'alésage. Préférentiellement, les dimensions radiales respectives de l'alésage d'une part et du deuxième élément de blocage et/ou de la cale d'autre part sont telles qu'il est possible d'insérer un outil de préhension dans l'alésage ;
- un effort radial associé à l'au moins un embrayage est supporté au niveau du support d'embrayage par un palier à roulements. Cette configuration permet astucieusement de réduire les dimensions radiales du palier, ce dernier étant porté radialement plus proche de l'axe de rotation O, réduisant ainsi les efforts supportés et l'usure dudit palier à roulements. Préférentiellement, le palier à roulements est du type à roulements obliques afin de pouvoir transmettre à la fois un effort axial et un effort radial ;
- la transmission peut éventuellement être couplée en rotation avec le système de commande afin d'empêcher tout mouvement de rotation relatif entre ledit système de commande et ladite transmission. Notamment, le système de commande peut être lié de manière amovible à la transmission par un moyen de fixation réalisant au moins un blocage en rotation vis-à-vis de ladite transmission ;

De manière complémentaire ou alternative, un mécanisme conforme au premier aspect de l'invention ou à l'un quelconque de ses premiers et/ou deuxièmes perfectionnements peut comprendre alternativement ou complémentairement au moins un des troisièmes perfectionnements ci-dessous pris éventuellement en combinaison :
- le carter du système de commande de l'embrayage présente une face plane agencée pour venir en appui axial sur la transmission. La collaboration de la face plane du carter avec une face en regard de la transmission forme le premier élément de blocage axial, et plus particulièrement sous la forme d'un élément d'arrêt axial ;
- le mécanisme conforme au premier aspect de l'invention comprend par ailleurs un support d'actionnement, de préférence en matériau métallique tel que de l'acier ou de l'aluminium, ou éventuellement en matière plastique ;
- le support d'actionnement est lié solidairement au système de commande, le support d'actionnement étant au moins couplé en rotation avec le carter dudit système de commande par des moyens de couplage en rotation qui sont décrit dans les paragraphes suivants ;
- le support d'actionnement est rapporté sur le carter du système de commande ;
- le support d'actionnement est situé axialement entre le carter du système de commande et un moyeu de sortie de l'embrayage ;
- le support d'embrayage est en appui axial sur le support d'actionnement au moins durant l'assemblage du mécanisme d'embrayage ;
- le support d'actionnement est monté avec un jeu axial vis-à-vis de la transmission afin de garantir que le blocage axial entre le système de commande et la transmission soit réalisé au niveau dudit système de commande. En d'autres termes, le support d'actionnement ne contribue pas directement au blocage axial avec la transmission. De cette manière, les tolérances dimensionnelles axiales du support d'actionnement sont faibles, permettant ainsi de fabriquer ledit support d'actionnement à moindre coût ;
- le support d'actionnement est monté dans un alésage du système de commande et sans jeu radial avec ledit système de commande. Préférentiellement, ce montage sans jeu est réalisé en force et permet de réaliser un couplage en rotation entre ledit support d'actionnement et ledit système de commande ;
- le support d'actionnement est serti dans un alésage du système de commande, permettant de réaliser un couplage en rotation entre ledit support d'actionnement et ledit système de commande.
- le support d'actionnement est issu de matière avec le carter du système de commande ;
- le support d'embrayage et le système de commande, et plus particulièrement le carter, sont couplés en rotation à l'aide d'un moyen de couplage en rotation qui est agencé pour pouvoir coupler en rotation le système de commande avec le support d'embrayage et d'empêcher tout mouvement de rotation relatif entre ledit système de commande et ledit support d'embrayage ;
- le support d'embrayage est en appui sur une portée circonférentielle formée sur le support d'actionnement ou sur le carter du système de commande. La portée circonférentielle est avantageusement située axialement entre le piston annulaire du système de commande et le moyeu de sortie de l'embrayage. ;
- le moyen de couplage en rotation entre le support d'embrayage et le système de commande est du type d'une liaison par cannelure, préférentiellement droite, ou par clavette ;
- le moyen de couplage en rotation comprend des premières cannelures situées par exemple sur la portée circonférentielle du carter du système de commande ou du support d'actionnement et des deuxième cannelures situées sur une portée complémentaire du support d'embrayage ;
- les premières cannelures sont du type mâle et les deuxièmes cannelures sont du type femelle ou, alternativement, les premières cannelures sont du type femelle et les deuxièmes cannelures sont du type mâle. On entend par cannelures de type mâle des cannelures qui s'étendent radialement vers l'extérieur, et par analogie des cannelures de type femelles des cannelures qui s'étendent radialement vers l'intérieur ;
- le système de commande est lié de manière amovible à la transmission par un moyen de fixation réalisant au moins un blocage en rotation vis-à-vis de ladite transmission, tel que par exemple à l'aide d'une vis d'assemblage ;
- le moyen de couplage en rotation se situe dans l'espace intérieur de l'organe de transmission de force, avantageusement situé radialement entre l'embrayage et l'arbre de transmission et axialement à l'intérieur dudit organe de transmission de force.

Selon un deuxième aspect de l'invention, il est proposé une transmission pour véhicule automobile comprenant un mécanisme d'embrayage conforme au premier aspect de l'invention ou à l'un quelconque de ses perfectionnements.

Selon un troisième aspect de l'invention, il est proposé un procédé d'assemblage d'un mécanisme d'embrayage conforme au premier aspect de l'invention ou à l'un quelconque de ses perfectionnements, ledit procédé d'assemblage comprenant les étapes suivantes :
- mise en appui axial du système de commande contre la transmission,
- couplage en rotation de l'embrayage avec le système de commande par insertion, notamment coulissement, du support d'embrayage sur une portée circonférentielle du système de commande,
- mise en appui axial du support d'embrayage contre le système de commande,
- blocage axial du support d'embrayage sur un arbre de transmission par insertion d'un anneau d'arrêt dans une gorge de l'arbre de transmission.

De manière avantageuse, le procédé conforme au troisième aspect de l'invention peut comprendre les étapes intermédiaires suivantes réalisées préférentiellement avant l'étape de blocage axial du support d'embrayage sur l'arbre de transmission :
- éventuellement, mesure d'un jeu résiduel entre le système de blocage axial et le support d'embrayage,
- insertion d'une calle entre le moyeu de sortie de l'embrayage et l'anneau d'arrêt de manière à réduire, voire annuler, le jeu axial entre le support d'embrayage et le système de commande.

Avantageusement, le procédé conforme au troisième aspect de l'invention comprend une étape de couplage en rotation du système de commande sur la transmission, ladite étape étant réalisée de manière préalable ou simultanée à l'étape de mise en appui axial du support d'embrayage sur le système de commande.

L'appui axial réalisé entre le carter et le support d'embrayage permet de réduire l'encombrement axial du mécanisme d'embrayage conforme à l'invention lors de son assemblage en deux parties.

Des modes de réalisation variés de l'invention sont prévus, intégrant selon l'ensemble de leurs combinaisons possibles les différentes caractéristiques optionnelles exposées ici.

### Description des figures et des modes de réalisation

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue en coupe axiale d'un système de transmission comprenant un mécanisme à double embrayage humide selon un premier aspect de l'invention,
- la FIGURE 2 illustre, une vue en coupe axiale d'un système de transmission comprenant un mécanisme à double embrayage humide conforme au premier aspect de l'invention et selon un deuxième mode de réalisation,
- la FIGURE 3 illustre une vue en coupe axiale d'un système de transmission comprenant un mécanisme à double embrayage humide conforme au premier aspect de l'invention et selon un troisième mode de réalisation,
- la FIGURE 4 illustre une vue en coupe axiale d'un système de transmission comprenant un mécanisme à double embrayage humide conforme au premier aspect de l'invention et selon un quatrième mode de réalisation.

Les modes de réalisation qui seront décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

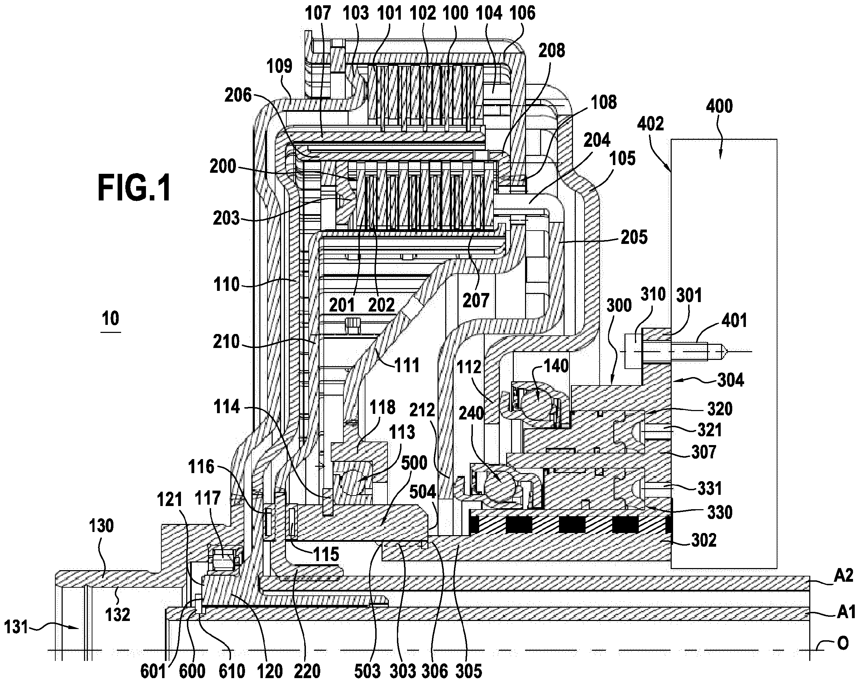

On a représenté sur la FIGURE 1 un mécanisme d'embrayage 10, notamment pour un véhicule automobile, présentant un axe principal de rotation O.

Dans les paragraphes qui suivent, le mécanisme d'embrayage 10 est présenté au travers de ses caractéristiques techniques et fonctionnelles communes à tous les modes de réalisation conformes au premier aspect de la présente invention. Les modes de réalisation seront décrits ensuite dans leurs spécificités et leurs différences par rapport à ces caractéristiques techniques et fonctionnelles communes. La FIGURE 1 sert de support à la description des caractéristiques techniques et fonctionnelles communes à tous les modes de réalisation du premier aspect de l'invention.

### Mode de réalisation général

Le mécanisme d'embrayage 10 illustré aux FIGURES 1 et suivantes est du type double embrayage humide, dans une position dite radiale, le premier embrayage 100 étant situé préférentiellement à l'extérieur du deuxième embrayage 200.

Alternativement, le mécanisme d'embrayage 10 peut être configuré dans une position dite axiale, le premier embrayage 100 étant agencé axialement vers l'arrière et le deuxième embrayage 200 étant agencé axialement vers l'avant.

Alternativement encore, le mécanisme d'embrayage 10 peut être du type double embrayage à sec.

Le mécanisme d'embrayage 10 à double embrayage humide est agencé pour pouvoir s'accoupler sélectivement l'arbre d'entrée à un premier arbre de transmission A1 ou à un deuxième arbre de transmission A2 par l'intermédiaire respectivement du premier embrayage 100 ou du deuxième embrayage 200.

De préférence, le premier arbre de transmission A1 et le deuxième arbre de transmission A2 sont coaxiaux.

Le premier embrayage 100 et le deuxième embrayage 200 sont préférentiellement de type multidisques. Chaque embrayage multidisques comprend d'une part une pluralité de premiers éléments de friction, tels que par exemple des disques de friction, liés solidairement en rotation à l'arbre d'entrée, et d'autre part une pluralité de deuxièmes éléments de friction, tels que par exemples des flasques, liés solidairement en rotation à au moins l'un des arbres de transmission.

Éventuellement, la pluralité de premiers éléments de friction consiste en des flasques liées solidairement en rotation à l'arbre d'entrée, et la pluralité de deuxièmes éléments de friction consiste en des disques de friction liés solidairement en rotation à au moins l'un des arbres de transmission.

Le premier arbre de transmission A1 est couplé en rotation à l'arbre d'entrée et entraîné par lui en rotation lorsque le premier embrayage 100 est configuré dans une position dite embrayée pour laquelle la pluralité de premiers éléments de friction 101 est couplée en rotation à la pluralité de seconds éléments de friction 102.

Le premier arbre de transmission A1 est découplé en rotation de l'arbre d'entrée lorsque le premier embrayage 100 est configuré dans une position dite débrayée pour laquelle la pluralité de premiers éléments de friction 101 est découplée en rotation à la pluralité de seconds éléments de friction 102.

Le deuxième arbre de transmission A2 est couplé en rotation à l'arbre d'entrée et entraîné par lui en rotation lorsque le deuxième embrayage 200 est configuré dans une position embrayée pour laquelle la pluralité de premiers éléments de friction 201 est couplée en rotation à la pluralité de seconds éléments de friction 202.

Le deuxième arbre de transmission A2 est découplé en rotation de l'arbre d'entrée lorsque le deuxième embrayage 200 est configuré dans une position dite débrayée pour laquelle la pluralité de premiers éléments de friction 201 est découplée en rotation à la pluralité de seconds éléments de friction 202.

Dans le contexte de l'invention, les arbres de transmission A1 et A2 sont agencés pour pouvoir coopérer avec une transmission 400 telle que par exemple une boite de vitesses du type de celles équipant des véhicules automobiles.

Dans le mécanisme d'embrayage 10 à double embrayage humide illustré sur la FIGURE 1, le premier embrayage 100 est agencé pour engager les rapports impairs de la transmission 400 et le deuxième embrayage 200 est agencé pour engager les rapports pairs et la marche arrière de la transmission 400. Alternativement, les rapports pris en charge par lesdits premier embrayage 100 et deuxième embrayage 200 sont respectivement inversés.

Le premier embrayage 100 et le deuxième embrayage 200 sont agencés pour transmettre alternativement une puissance dite d'entrée - un couple et une vitesse de rotation - de l'arbre d'entrée, à l'un des deux arbres de transmission A1, A2, en fonction de l'état respectif des embrayages 100 et 200 et par l'intermédiaire d'un voile d'entrée 109.

Préférentiellement, les embrayages 100 et 200 sont agencés pour ne pas être simultanément dans la même position embrayée ou débrayée. Éventuellement, les premier et deuxième embrayages 100, 200 peuvent simultanément être configurés dans la position débrayée.

Le mécanisme d'embrayage 10 comporte autour de l'axe O au moins un élément d'entrée qui est lié en rotation à un arbre d'entrée non représenté. De préférence, l'élément d'entrée du mécanisme d'embrayage 10 comprend au moins un moyeu d'entrée 130. Sur son élongation inférieure, le moyeu d'entrée 130 est lié en rotation et/ou axialement à l'arbre d'entrée, éventuellement par l'intermédiaire d'un dispositif d'amortissement tel qu'un double volant amortisseur par exemple.

Sur son élongation extérieure, le moyeu d'entrée 130 est couplé en rotation à un voile d'entrée 109, au niveau d'un extrémité inférieure et située vers l'arrière dudit voile d'entrée 109 ; préférentiellement ils sont solidaires, par exemple fixés par soudage et/ou par rivetage. Du côté de son extrémité supérieure, le voile d'entrée 109 est lié en rotation à un premier embrayage 100 par l'intermédiaire d'un porte-disques d'entrée 106, ledit porte-disques d'entrée 106 étant lié en rotation audit voile d'entrée 109, préférentiellement par coopération de formes, notamment du type cannelures.

Les premier et deuxième embrayages 100 et 200 sont commandés par un système de commande 300 comprenant un premier et un deuxième actionneur 320, 330. Le système de commande 300 comprend un carter 307 dont la partie supérieure 301 agencée pour recevoir éventuellement des moyens de fixation 310 coopérant avec la transmission 400. Le carter 307 du système de commande 300 comprend aussi une partie inférieure 302 présentant une élongation axiale agencée pour supporter les premier et deuxième actionneurs 320 et 330. Au niveau de sa partie située vers l'arrière, le système de commande 300 présente une face dite d'appui 304, préférentiellement plane, agencée pour réaliser un appui plan avec la transmission 400. La face d'appui 304 est préférentiellement située axialement vers l'arrière du système de commande 300.

De manière préférentielle, les premier et deuxième actionneurs 320 et 330 sont du type vérin hydraulique. Les premier et deuxième actionneurs 320, 330 peuvent chacun comprendre un piston annulaire. Le système de commande 300 comprend un premier et un deuxième canal d'alimentation en fluide hydraulique 321 et 331 pour les premier et deuxième actionneurs 320, 330. Préférentiellement, le fluide hydraulique est un fluide sous pression, par exemple de l'huile.

Le premier actionneur 320 est agencé pour configurer le premier embrayage 100 dans une position comprise entre la position embrayée et la position débrayée. Plus particulièrement, le premier actionneur 320 est mobile axialement, ici de l'arrière vers l'avant, entre la position embrayée et la position débrayée du premier embrayage 100.

Le premier actionneur 320 est lié au premier embrayage 100 par l'intermédiaire d'une part d'un premier palier 140 et d'autre part d'un premier organe de transmission de force 105.

Le premier palier 140 est agencé pour transmettre des efforts axiaux générés par le premier actionneur 320 au premier organe de transmission de force 105.

Le premier organe de transmission de force 105 est agencé pour transmettre un effort axial au niveau de son élongation supérieure 104 au premier embrayage 100, ladite élongation supérieure 104 s'étendant axialement vers l'avant pour pouvoir écarter ou presser les premiers éléments de friction 101 contre les deuxièmes éléments de friction 102 d'une part, et contre un moyen de réaction extérieur 103 du voile d'entrée 109 d'autre part.

Le moyen de réaction extérieur 103 est couplé en rotation au moyeu d'entrée 130 par l'intermédiaire du voile d'entrée 109. De préférence, le moyen de réaction extérieur 103 et le voile d'entrée 109 sont réalisés en une seule pièce, en variante en deux pièces fixées ensemble par tous moyens tels que par rivetage ou soudage.

Le moyen de réaction extérieur 103 a une forme complémentaire à celle des premiers ou deuxièmes éléments de friction, de manière à permettre un couplage par friction des premiers et deuxièmes éléments de friction 101, 102 lorsque le premier actionneur 320 exerce un effort axial vers l'avant pour configurer le premier embrayage 100 dans sa position embrayée. À titre d'exemple non limitatif, le moyen de réaction peut prendre la forme d'un disque qui s'étend radialement vers l'extérieur et dont une zone centrale s'étend axialement vers l'avant.

Le moyen de réaction extérieur 103 présente notamment une cannelure extérieure qui coopère avec une cannelure intérieure du voile d'entrée 109.

Le premier embrayage 100 est préférentiellement du type multidisques. Il comprend au moins un premier élément de friction 101, tel que par exemple un disque de friction. Les premiers éléments de friction 101 sont couplés en rotation au premier arbre de transmission A1 par l'intermédiaire d'un porte-disques de sortie 110 formant un élément de sortie du premier embrayage 100.

Le porte-disques de sortie 110 comporte sur sa périphérie radiale extérieure une élongation axiale 107 qui est munie d'une denture destinée à coopérer avec une denture complémentaire sur chaque premier élément de friction 101, et plus particulièrement à la périphérie radiale intérieure de chaque premier élément de friction 101. Le porte-disques de sortie est ainsi couplé en rotation par engrènement avec les premiers éléments de friction 101.

Au niveau de son extrémité radiale inférieure, le porte-disques de sortie 110 est lié à un premier moyeu de sortie 120. Le premier porte-disques de sortie 110 et le premier moyeu de sortie 120 sont préférentiellement fixés ensemble par soudage, en variante par rivetage.

Le premier moyeu de sortie 120 comporte radialement à l'intérieur des cannelures axiales agencées pour coopérer avec des cannelures complémentaires situées sur le premier arbre de transmission A1, de manière à réaliser un couplage en rotation.

Le premier embrayage 100 comprend aussi des moyens élastiques de rappel pour repousser automatiquement le premier actionneur 320 en position débrayée. De préférence, les moyens élastiques de rappel sont formés par des rondelles élastiques, telles que des rondelles ondulées de type « Onduflex TM ». Les rondelles élastiques de rappel sont interposées axialement entre les deuxièmes éléments de friction 101, 102. Elles sont préférentiellement agencées radialement à l'intérieur des premiers éléments de friction 101. Chaque rondelle élastique de rappel est axialement en appui contre la face radiale avant d'un deuxième élément de friction 102 et contre la face radiale arrière d'un autre deuxième élément de friction 102 axialement adjacent.

Les moyens élastiques de rappel sollicitent axialement les deuxièmes éléments de friction afin de faciliter la libération des premiers éléments de friction 101 et le rappel du premier actionneur 320 vers la position débrayée.

En variante non représentée, les moyens de rappel du premier actionneur 320 sont formés par au moins un ressort.

Le deuxième embrayage 200 du mécanisme d'embrayage 10 est de conception similaire à celle du premier embrayage 100, le deuxième embrayage 200 étant préférentiellement de type multidisques.

Avantageusement, on se reportera au besoin pour la description du deuxième embrayage 200 à la description détaillée du premier embrayage 100 donnée précédemment.

De manière comparable à la position décrite pour le premier embrayage 100, le deuxième actionneur 330 est agencé pour configurer le deuxième embrayage 200 dans une position comprise entre la position embrayée et la position débrayée.

Le deuxième actionneur 330 est lié au deuxième embrayage 200 par l'intermédiaire d'une part d'un deuxième palier 240 et d'autre part d'un deuxième organe de transmission de force 205.

Le deuxième actionneur comprend préférentiellement un piston annulaire monté axialement coulissant sur le carter 307 du système de commande.

Le deuxième palier 240 est agencé pour d'une part transmettre des efforts axiaux générés par le deuxième actionneur 330 au deuxième organe de transmission de force 205, et d'autre part pour supporter la charge radiale exercée par le premier organe de transmission de force 105.

Le deuxième organe de transmission de force 205 est agencé pour transmettre un effort axial au niveau de son élongation supérieure 204 au deuxième embrayage 200, ladite élongation supérieure 204 s'étendant axialement vers l'avant et au travers d'une ouverture 108 aménagée dans l'porte-disques d'entrée 106 pour pouvoir écarter ou presser les premiers éléments de friction 201 contre les deuxièmes éléments de friction 202 d'une part, et contre un moyen de réaction intérieur 203.

Le moyen de réaction intérieur 203 est solidaire d'une partie d'élongation axiale 206 orientée vers l'avant et solidaire de l'porte-disques d'entrée 106 par l'intermédiaire d'une partie d'élongation radiale 208 qui est fixée à l'porte-disques d'entrée 106 par tous moyens, par exemple par soudage ou par rivetage. Alternativement, le moyen de réaction intérieur 203 et l'porte-disques d'entrée 106 sont réalisés en une seule pièce.

Le deuxième organe de transmission de force 205 est situé axialement entre l'porte-disques d'entrée 106 et le premier organe de transmission de force 105.

Sur sa partie inférieure, le deuxième organe de transmission de force 205 comprend un alésage 212 afin de laisser un espace intérieur pour ne pas réaliser un appui radial sur le système de commande 300 ou sur l'un des arbres de transmission A1, A2.

Le moyen de réaction extérieur 203 a une forme complémentaire à celle des premiers ou deuxièmes éléments de friction 201, 202, de manière à permettre un couplage par friction des premiers et deuxièmes éléments de friction 201, 202 lorsque le deuxième actionneur 330 exerce un effort axial vers l'avant pour configurer le deuxième embrayage 200 dans sa position embrayée. À titre d'exemple non limitatif, le moyen de réaction 230 peut prendre la forme d'un anneau avec une denture sur le pourtour extérieur et une gorge centrale d'appui qui s'étend axialement vers l'arrière.

Le deuxième embrayage 200 est préférentiellement du type multidisques. Il comprend au moins un premier élément de friction 201, tel que par exemple un disque de friction. Les premiers éléments de friction 201 sont couplés en rotation au deuxième arbre de transmission A2 par l'intermédiaire d'un deuxième porte-disques de sortie 210 formant un élément de sortie du deuxième embrayage 200.

Le deuxième porte-disques de sortie210 comporte à sa périphérie radiale extérieure une élongation axiale 207 qui est munie d'une denture destinée à coopérer avec une denture complémentaire sur chaque premier élément de friction 201, et plus particulièrement à la périphérie radiale intérieure de chaque premier élément de friction 201. Le deuxième porte-disques de sortie est ainsi couplé en rotation par engrènement avec les premiers éléments de friction 201.

Au niveau de son extrémité radiale inférieure, le deuxième porte-disques de sortie210 est lié à un deuxième moyeu de sortie 220. Le deuxième porte-disques de sortie210 et le deuxième moyeu de sortie 220 sont préférentiellement fixés ensemble par soudage, en variante par rivetage.

Le deuxième moyeu de sortie 220 comporte radialement à l'intérieur des cannelures axiales agencées pour coopérer avec des cannelures complémentaires situées sur le deuxième arbre de transmission A2, de manière à réaliser un couplage en rotation.

Préférentiellement, le deuxième arbre de transmission A2 prend la forme d'un cylindre creux à l'intérieur duquel le premier arbre de transmission A1 peut être inséré.

Le deuxième embrayage 200 comprend aussi des moyens élastiques de rappel pour repousser automatiquement le deuxième actionneur 330 en position débrayée. De préférence, les moyens élastiques de rappel sont formés par des rondelles élastiques, telles que des rondelles ondulées de type « Onduflex TM ». Les rondelles élastiques de rappel sont interposées axialement entre les deuxièmes éléments de friction 201, 202. Elles sont préférentiellement agencées radialement à l'intérieur des premiers éléments de friction 201. Chaque rondelle élastique de rappel est axialement en appui contre la face radiale avant d'un deuxième élément de friction 202 et contre la face radiale arrière d'un autre deuxième élément de friction 202 axialement adjacent.

Les moyens élastiques de rappel sollicitent axialement les deuxièmes éléments de friction afin de faciliter la libération des premiers éléments de friction 201 et le rappel du deuxième actionneur 330 vers la position débrayée.

En variante non représentée, les moyens de rappel du deuxième actionneur 330 sont formés par au moins un ressort.

Le porte-disques d'entrée 106 comprend en outre un segment dit intérieur 111 qui s'étend radialement vers l'intérieur du mécanisme d'embrayage 10 au niveau de l'ouverture 108 et axialement vers l'avant. À son extrémité inférieure, le segment intérieur 111 du porte-disques d'entrée 106 prend appui sur un talon 118 en appui radial sur un palier à roulements 113 agencé pour supporter la charge radiale du porte-disques d'entrée 106.

Radialement, le palier à roulements 113 est lié solidairement à un support d'embrayage 500 situé dans une position axiale intermédiaire entre le système de commande 300 et les premier et deuxième moyeux de sortie 120, 220.

Axialement, la position du palier à roulements 113 est définie vers l'avant par une butée 114. La butée 114 peut préférentiellement être du type d'un anneau de blocage ou anneau d'arrêt. Par ailleurs, la butée 114 peut préférentiellement être logée dans une gorge réalisée sur la surface périphérique du support d'embrayage 500.

D'une manière plus générale, le palier à roulements 113 est disposé radialement entre le support d'embrayage 500 et le porte-disques d'entrée 106. Axialement, le palier à roulements 113 est arrêté axialement par un anneau d'arrêt 114 disposé du côté opposé à l'effort axial exercé par premier ou deuxième actionneur 320, 330.

Avantageusement, le palier à roulements 113 est du type d'un palier à contacts obliques afin de pouvoir transmettre à la fois un effort axial et un effort radial. Cet effort axial est, au niveau du pallier à roulements 113, repris par la butée 114. En effet, lorsque le premier ou le deuxième actionneur 320, 330 transmet un effort axial au premier ou deuxième organe de force 105, 205 afin de configurer l'embrayage 100, 200 correspondant dans une configuration embrayée ou débrayée, un effort axial est transmis entre une première extrémité comprenant ledit premier ou deuxième actionneur 320, 330 et une deuxième extrémité située au niveau de l'arbre de la transmission A1, A2, et plus particulièrement au niveau deuxième élément de blocage 600. Tous les éléments participants à la transmission d'un effort axial lors du fonctionnement de l'embrayage et situés axialement entre le deuxième élément de blocage 600 et le premier ou deuxième actionneur 320, 330 sont bloqués axialement de manière à pouvoir transmettre ledit effort axial.

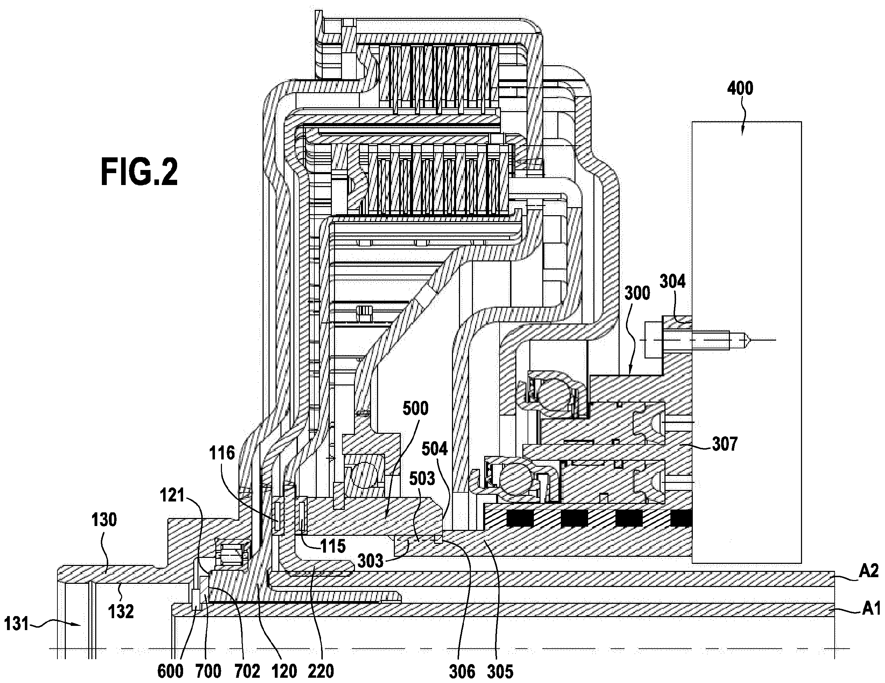

Le support d'embrayage 500 est lié directement ou indirectement au système de commande 300 selon les différents modes de réalisation du mécanisme d'embrayage 10 conforme au premier aspect de l'invention qui vont maintenant être décrits. Chaque mode de réalisation illustré ci-après permet de bloquer axialement et de coupler en rotation le mécanisme d'embrayage 10 le long de la chaîne de transmission. Seules certaines des spécificités et des différences techniques et fonctionnelles de chaque mode de réalisation seront décrites, en comparaison au mode de réalisation général décrit précédemment au travers des FIGURES 1 et 2 afin de faciliter la compréhension de l'invention.

### Premier mode de réalisation

Dans le premier mode de réalisation décrit au travers de la FIGURE 1, le système de commande 300 est d'abord lié solidairement à la transmission 400, via un couplage axial et un couplage en rotation de manière à empêcher tout mouvement relatif axial, radial et autour de l'axe O entre ledit système de commande 300 et ladite transmission 400. Ensuite, un blocage au moins axial du mécanisme d'embrayage 10 est réalisé par l'intermédiaire notamment du support d'embrayage 500 afin d'empêcher un mouvement vers l'arrière dudit mécanisme d'embrayage 10 par rapport à la transmission 400. A titre d'exemple non limitatif, il peut s'agir d'un assemblage par vis d'assemblage.

Pour ce faire, le système de commande 300 est d'abord fixé à la transmission 400 par l'intermédiaire d'au moins un moyen de fixation 310 agencé pour coopérer avec au moins un moyen de fixation complémentaire 401 de la transmission 400. L'au moins un moyen de fixation 310 est préférentiellement situé sur une partie d'élongation radiale vers l'extérieure du carter 307 du système de commande 300, dite partie supérieure 301, afin de permettre un accès facile par l'arrière lors du montage dudit système de commande 300 sur ladite transmission 400. Préférentiellement, la partie supérieure 301 s'étend radialement plus loin vers l'extérieur que les autres parties du système de commande 300. Sur l'exemple illustré, le moyen de fixation 310 comprend trois zones de fixation réparties radialement autour de l'axe O.

Dans l'exemple illustré sur la FIGURE 1, les moyens de fixation 310 comprennent au moins une vis agencée pour s'insérer dans un taraudage réalisé sur la face 402 de la transmission 400 en regard avec le système de commande 300. On réalise ainsi un blocage à la fois axial et radial du système de commande 300 sur la transmission 400.

Le système de commande 300 comprend en outre un premier élément de blocage axial permettant de garantir un couplage axial robuste et invariant du système de commande 300 par rapport à la transmission 400 lors du fonctionnement du mécanisme d'embrayage 10, ledit blocage axial empêchant tout mouvement relatif vers l'avant ou vers l'arrière du système de commande 300 par rapport à la transmission 400. Dans l'exemple illustré sur la FIGURE 1, le premier élément de blocage de blocage axial comprend un appui plan réalisé entre la face d'appui 304 du système de commande 300 et la face en regard 402 de la transmission 400.

Éventuellement, les moyens de fixation consistent en au moins deux goupilles collaborant conjointement entre la transmission 400 et le système de commande 300, et plus particulièrement le carter 307.

Lorsque le système de commande 300 est lié solidairement à la chaîne de transmission 400, le mécanisme d'embrayage peut être déployé le long des arbres de transmission A1 et A2 afin de réaliser son assemblage sur la chaîne de transmission.

Pour ce faire, le support d'embrayage 500 est couplé axialement et en rotation au système de commande 300 grâce respectivement à un moyen de couplage axial et un moyen de couplage en rotation distinct dudit moyen de couplage axial.

Le moyen de couplage en rotation comprend des premières cannelures 303 situées sur une portée du système de commande 300 et des deuxième cannelures 503 situées sur une portée complémentaire du support d'embrayage 500. Selon une première variante, les premières cannelures sont du type mâle et les deuxièmes cannelures sont du type femelle. Selon une seconde variante, les premières cannelures sont du type femelle et les deuxièmes cannelures sont du type mâle.

De manière complémentaire, le moyen de couplage axial est agencé pour empêcher tout mouvement relatif axial et vers l'arrière entre le support d'embrayage 500 et le système de commande 300.

Une portée 305 s'étendant axialement vers l'avant de la partie inférieure 302 du carter 307 du système de commande 300 porte une butée d'appui axial 306 contre laquelle une face avant 504 coopère pour réaliser un blocage axial. De cette manière, le support d'embrayage 500 est bloqué axialement vers l'avant. Dans l'exemple illustré sur la FIGURE 1, le blocage axial entre le système de commande 300 et le support d'embrayage 500 comprend un appui plan de la face avant 504 sur la butée d'appui axial 306.

Dans l'exemple illustré sur la FIGURE 1, la butée 305 est issue de matière avec le carter 307 du système de commande 300.

Préférentiellement, la butée d'appui axial est située dans un espace intérieur 212 du deuxième organe de transmission de force 205.

Vers l'avant, le support d'embrayage 500 est axialement bloqué par l'intermédiaire des paliers 115 et 116 situés respectivement entre le support d'embrayage 500 et le deuxième moyeu de sortie 220 et entre les deuxième et premier moyeux de sortie 220 et 120 et d'un deuxième élément de blocage axial 600 situé sur le premier arbre de transmission A1. Le deuxième élément de blocage axial 600 est plus particulièrement situé devant le premier moyeu de sortie 120 du premier embrayage 100 et il est en appui plan avec ledit premier moyeu de sortie 120

Les paliers 115 et 116 permettent ainsi de transmettre un effort axial malgré la rotation différentielle entre les premier et deuxième moyeux de sortie 120, 220.

À titre d'exemple non limitatifs, il peut s'agir de roulements à billes ou de paliers à aiguilles.

Le deuxième élément de blocage axial 600 est ainsi agencé pour empêcher tout mouvement axial du premier moyeu de sortie 120 sur le premier arbre de transmission A1.

Le deuxième élément de blocage axial 600 est préférentiellement logé dans une gorge 610 située sur un contour périphérique du premier arbre de transmission A1.

De manière astucieuse, on accède au deuxième élément de blocage axial 600 grâce à un alésage 131 réalisé sur le moyeu d'entrée 130. Radialement, les dimensions de l'alésage 131 sont telles qu'un espace non nul subsiste entre la face supérieure 601 du deuxième élément de blocage axial 600 et la face intérieure 132 de l'alésage 131. Préférentiellement, les dimensions radiales respectives de l'alésage 131 et du deuxième élément de blocage axial 600 sont telles qu'il est possible d'insérer un outil de préhension dans l'alésage pour mettre en place ledit deuxième élément de blocage axial 600, éventuellement dans la gorge 610 avec laquelle il peut coopérer.

Dans ce premier mode de réalisation, les dimensions axiales de la portée 305 du système de commande 300 et/ou du support d'embrayage 500 sont respectivement ajustées de sorte que le deuxième élément de blocage axial 600 soit en appui sur la face avant 121 du premier moyeu de sortie 120.

Plus particulièrement, la distance entre la face d'appui 304 située à l'arrière du système de commande 300 et la butée d'appui axial 306 située sur la portée 305 dudit système de commande 300 est ajustée de manière à supprimer tout jeu résiduel entre ces deux pièces lorsque le mécanisme d'embrayage 10 est assemblé. Éventuellement, un jeu fonctionnel minimal est toléré.

Ainsi, dans ce premier mode de réalisation, le système de blocage axial du mécanisme d'embrayage 10 sur la chaîne de transmission comprend :
- un premier élément de blocage axial du système de commande 300 sur la transmission 400, ledit premier élément de blocage axial étant agencé pour réaliser préférentiellement un appui de type appui plan de la face d'appui 304 du système de commande sur la face en regard 402 de la transmission ;
- un deuxième élément de blocage axial 600 situé au niveau du premier arbre de transmission A1 agencé pour réaliser un appui axial, préférentiellement de type appui plan sur le premier moyeu de sortie 120, et plus particulièrement sur sa face avant 121 ;
- un appui axial entre le support d'embrayage 500 et le système de commande 300, ledit appui axial étant agencé pour empêcher tout mouvement relatif axial vers l'avant dudit système de commande 300 par rapport audit support d'embrayage 500.

Dans ce premier mode de réalisation, le moyen de couplage en rotation comprend des premières cannelures 303 situées sur le système de commande 300 agencées pour coopérer avec des deuxièmes cannelures 503 situées sur le support d'embrayage 500 afin de réaliser un couplage en rotation entre ledit support d'embrayage 500 et ledit système de commande 300. Les premières cannelures 303 sont préférentiellement du type mâle, et les deuxièmes cannelures 503 sont préférentiellement du type femelle.

### Deuxième mode de réalisation

Le deuxième mode de réalisation d'un mécanisme d'embrayage 10 conforme au premier aspect de l'invention est décrit au travers de la FIGURE 2. Pour en faciliter la compréhension, seules les différences vis-à-vis du premier mode de réalisation sont décrites ci-après.

Le moyen de couplage en rotation est strictement conforme à celui mis-en oeuvre dans le premier mode de réalisation : il comprend des premières cannelures 303, préférentiellement du type mâle, situées sur le système de commande 300 agencées pour coopérer avec des deuxièmes cannelures, préférentiellement du type femelle, situées sur le support d'embrayage 500 afin de réaliser un couplage en rotation entre ledit support d'embrayage 500 et ledit système de commande 300.

Le deuxième élément de blocage de blocage axial du deuxième mode de réalisation diffère du deuxième élément de blocage de blocage axial du premier mode de réalisation uniquement en ce qu'il comprend de manière complémentaire une cale 700 situé dans une position intermédiaire entre le deuxième élément de blocage axial 600 et la face arrière 121 du premier moyeu de sortie 120.

La cale 700 est ajustée pour réaliser d'une part un premier appui plan entre la face arrière 701 et le deuxième élément de blocage axial 600 et d'autre part un deuxième appui plan entre la face avant 702 et la face avant 121 du premier moyeu de sortie 120.

La dimension axiale de la cale 700 est ajustée de manière à limiter voire éliminer tout jeu axial le long de la chaîne de transmission, et plus particulièrement :
- entre la face d'appui 304 située à l'arrière du système de commande 300 et la butée d'appui axial 306 située sur la portée 305 dudit système de commande ;
- entre le support d'embrayage 500 et le palier 115 ;
- entre le palier 115 et le deuxième moyeu de sortie 220 ;
- entre le deuxième moyeu de sortie 220 et le palier 116 ;
- entre le palier 116 et le premier moyeu de sortie 120 ;
- entre le premier moyeu de sortie 120 et la cale 700.

### Troisième mode de réalisation

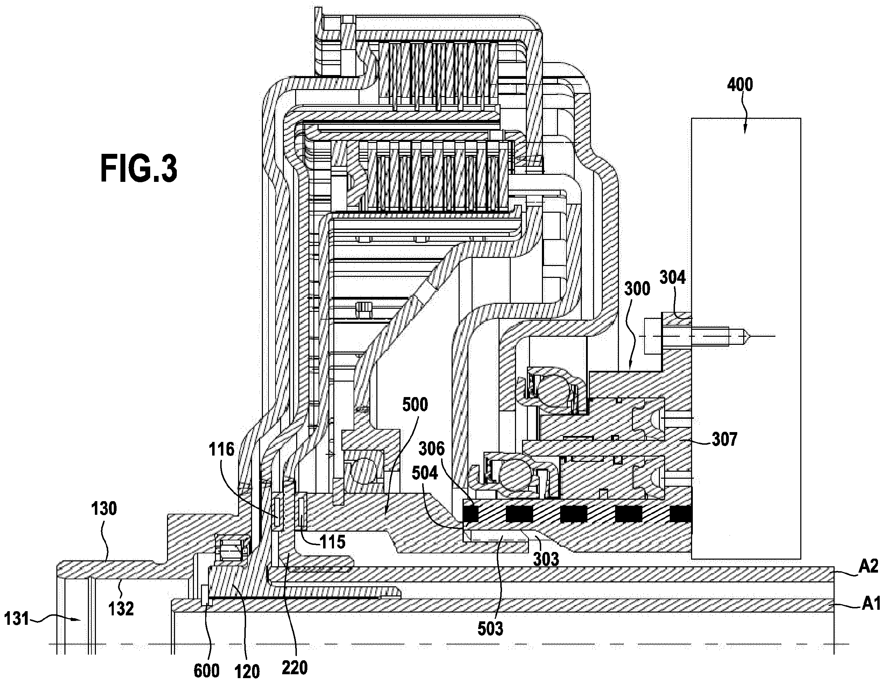

Le troisième mode de réalisation d'un mécanisme d'embrayage 10 conforme au premier aspect de l'invention est décrit au travers de la FIGURE 3. Pour en faciliter la compréhension, seules les différences vis-à-vis du premier mode de réalisation sont décrites ci-après.

Le moyen de couplage en rotation ne diffère de celui mis-en oeuvre dans le premier mode de réalisation qu'en ce qu'il comprend des premières cannelures 303, préférentiellement du type femelles, situées sur le système de commande 300 et agencées pour coopérer avec des deuxièmes cannelures 503, préférentiellement du type mâle, situées sur le support d'embrayage 500 afin de réaliser un couplage en rotation entre ledit support d'embrayage 500 et ledit système de commande 300.

Le système de blocage axial du deuxième mode de réalisation est strictement identique à celui mis en oeuvre et décrit dans le premier mode de réalisation. Il comprend :
- un premier élément de blocage axial du système de commande 300 sur la transmission 400, ledit appui axial étant agencé pour réaliser préférentiellement un appui de type appui plan de la face d'appui 304 du système de commande sur la face en regard 402 de la transmission ;
- un deuxième élément de blocage axial 600 situé au niveau du premier arbre de transmission A1 agencé pour réaliser un appui axial, préférentiellement de type appui plan sur le premier moyeu de sortie 120, et plus particulièrement sur sa face avant 121 ;
- un appui axial entre le support d'embrayage 500 et le système de commande 300, ledit appui axial étant agencé pour empêcher tout mouvement relatif axial vers l'avant dudit système de commande 300 par rapport audit support d'embrayage 500.

### Quatrième mode de réalisation

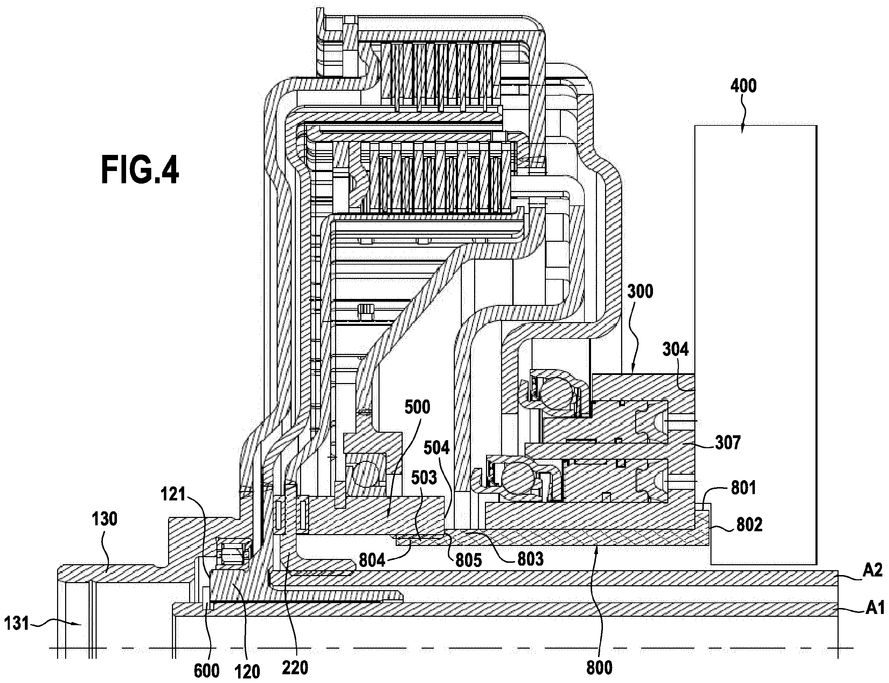

Le quatrième mode de réalisation d'un mécanisme d'embrayage 10 conforme au premier aspect de l'invention est décrit au travers de la FIGURE 4. Pour en faciliter la compréhension, seules les différences vis-à-vis du premier mode de réalisation sont décrites ci-après.

Dans ce quatrième mode de réalisation, le support d'actionnement 800 est rapporté sur le carter 307 du système de commande 300. Le support d'actionnement est situé radialement entre ledit système de commande 300 et le deuxième arbre de transmission A2. Le support d'actionnement 800 est lié solidairement au carter 307 du système de commande 300.

Selon une première variante, le support d'actionnement 800 est monté dans un alésage du système de commande 300 et sans jeu radial avec ledit système de commande 300. Alternativement, selon une seconde variante le support d'actionnement 800 est serti dans un alésage du système de commande 300.

Dans ce quatrième mode de réalisation tel qu'illustré sur la FIGURE 4, le support d'actionnement 800 est préférentiellement monté avec un jeu axial 802 vis-à-vis de la transmission 400, de sorte qu'un couplage axial avec ladite transmission ne soit pas réalisé au niveau dudit support d'actionnement 800. Le couplage axial est dans ce cas préférentiellement réalisé au niveau de la face d'appui 304 du système de commande 300 afin de garantir l'absence de jeu axial. Plus particulièrement, la face d'appui 304 est en appui plan contre la face en regard 402 de la transmission 400.

Éventuellement, des moyens de fixation 310 tels que des vis d'assemblage permettent de fixer solidairement le système de commande 300 sur la transmission 400.

Le support d'actionnement 800 comprend par ailleurs sur sa partie inférieure une portée d'élongation axiale vers l'avant 804. La portée 804 comprend une butée d'appui axial 806 agencée pour réaliser un appui axial du support d'embrayage 500 sur ledit support d'actionnement 800 afin d'empêcher un mouvement relatif axial vers l'arrière entre ledit support d'embrayage 500 et ledit support d'actionnement 800.

Dans ce quatrième mode de réalisation, les dimensions axiales du support d'actionnement 800 et/ou du support d'embrayage 500 sont respectivement ajustées de sorte que le deuxième élément de blocage axial 600 soit en appui sur la face arrière 121 du premier moyeu de sortie 120.

Plus particulièrement, la distance entre la face d'appui 304 située à l'arrière du système de commande 300 et la butée d'appui axial 806 située sur la portée 803 du support d'actionnement 800 est ajustée de manière à supprimer tout jeu résiduel entre ces deux pièces lorsque le mécanisme d'embrayage 10 est assemblé. Éventuellement, un jeu fonctionnel minimal est toléré.

Ainsi, dans ce quatrième mode de réalisation, le système de blocage axial du mécanisme d'embrayage 10 sur la chaîne de transmission comprend :
- un premier élément de blocage axial du système de commande 300 sur la transmission 400, ledit appui axial étant agencé pour réaliser préférentiellement un appui de type appui plan de la face d'appui 304 du système de commande sur la face en regard 402 de la transmission, et le système de commande 300 étant solidaire axialement du support d'actionnement 800 ;
- un deuxième élément de blocage axial 600 situé au niveau du premier arbre de transmission A1 agencé pour réaliser un appui axial, préférentiellement de type appui plan sur le premier moyeu de sortie 120, et plus particulièrement sur sa face avant 121 ;
- un appui axial entre le support d'embrayage 500 et le support d'actionnement 800, ledit appui axial étant agencé pour empêcher tout mouvement relatif axial vers l'arrière dudit support d'actionnement 800 par rapport audit support d'embrayage 500.

Dans ce quatrième mode de réalisation, le moyen de couplage en rotation comprend des premières cannelures 805 situées sur le support d'actionnement 800 et agencées pour coopérer avec des deuxièmes cannelures 503 situées sur le support d'embrayage 500 afin de réaliser un couplage en rotation entre ledit support d'embrayage 500 et ledit support d'actionnement 800.

Les premières cannelures 805 sont préférentiellement du type femelle, et les deuxièmes cannelures 503 sont préférentiellement du type mâle.

Le moyen de couplage en rotation de la transmission 400 avec le support d'actionnement 800 et/ou le système de commande 300 comprend par ailleurs des vis d'assemblage.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Mécanisme d'embrayage destiné à être installé entre un moteur et une transmission de véhicule automobile, ledit mécanisme comprenant :
- un sous-ensemble comprenant :
- au moins un embrayage (100, 200) ;
- un support d'embrayage (500) agencé pour supporter radialement l'embrayage par l'intermédiaire d'un palier à roulements (113) ;
- un système de commande de l'embrayage (300) comprenant un carter (307) et au moins un piston annulaire (320, 330) agencé pour se déplacer axialement par rapport au carter (307) afin d'embrayer ou de débrayer l'embrayage (100, 200), le support d'embrayage (500) étant situé dans une position axialement intermédiaire entre ledit système de commande (300) et un moyeu de sortie (120, 220) du mécanisme d'embrayage,
- un système de blocage axial du système de commande vis-à-vis de l'embrayage, ledit système de blocage axial comprenant :
- un premier élément de blocage axial (304, 402) agencé pour réaliser au moins un arrêt axial entre le système de commande (300) et la transmission (400) ;
- un deuxième élément de blocage axial (600) agencé pour réaliser au moins un arrêt axial entre l'embrayage et un arbre de la transmission (A1, A2) ;
**caractérisé en ce que**
ledit support d'embrayage (500) est distinct du système de commande (300), et **en ce que**
le mécanisme d'embrayage comprend un moyen de couplage en rotation (303, 503) du support d'embrayage (500) vis-à-vis du système de commande (300), ledit moyen de couplage en rotation (303, 503) étant distinct du système de blocage axial.

2. Mécanisme selon la revendication précédente, **caractérisé en ce qu'**il comprend deux embrayages multidisques (100, 200), le système de commande (300) comprenant un premier et un deuxième pistons annulaires (320, 330), agencés respectivement pour coupler ou découpler le premier et le deuxième embrayage (100, 200) sur un premier ou un deuxième arbre de la transmission (A1, A2).

3. Mécanisme selon l'une quelconque des revendications 1 ou 2, **caractérisé en ce qu'**il comprend un support d'actionnement (800) au moins couplé en rotation avec le carter (307) du système de commande (300).

4. Mécanisme selon la revendication 3, **caractérisé en ce que** le support d'actionnement (800) est issu de matière avec le carter (307) du système de commande (300).

5. Mécanisme selon la revendication 3, **caractérisé en ce que** le support d'actionnement (800) est rapporté sur le carter (307) du système de commande (300).

6. Mécanisme selon la revendication 4 ou 5, caractérisé en ce le support d'embrayage (500) est en appui sur une portée circonférentielle formée sur le support d'actionnement (800) et située axialement entre le piston annulaire (320, 330) du système de commande (300) et le moyeu de sortie (120, 220) de l'embrayage (100, 200).

7. Mécanisme selon l'une quelconque des revendications précédentes, **caractérisé en ce que** le deuxième élément de blocage axial (600) est en appui axial sur l'arbre (A1, A2) de la transmission (400) et sur le moyeu de sortie (120, 220) de l'embrayage (100, 200).

8. Mécanisme selon l'une quelconque des revendications précédentes, **caractérisé en ce que** le deuxième élément de blocage axial (600) comprend un élément du type anneau d'arrêt.

9. Mécanisme selon la revendication 8, **caractérisé en ce que** le deuxième élément de blocage axial (600) comprend en outre une cale (700) interposée axialement entre l'anneau d'arrêt et le moyeu de sortie (120, 220).

10. Mécanisme selon l'une quelconque des revendications 6 à 9, **caractérisé en ce que** le moyen de couplage en rotation (303, 503) entre le support d'embrayage et le système de commande est du type d'une clavette.

11. Mécanisme selon l'une quelconque des revendications 6 à 9, **caractérisé en ce que** le moyen de couplage en rotation (303, 503) comprend des premières cannelures (303) situées sur la portée circonférentielle (305) et des deuxièmes cannelures (503) situées sur une portée complémentaire du support d'embrayage (500).

12. Mécanisme selon la revendication 11, **caractérisé en ce que** le moyen de couplage en rotation (303, 503) est disposé axialement dans un espace intérieur d'un organe de transmission de force (105, 205).

13. Mécanisme selon l'une quelconque des revendications précédentes, **caractérisé en ce que** le premier élément de blocage axial (304, 402) comprend une face d'appui (304) du carter (307) située en regard de la transmission (400).

14. Procédé d'assemblage d'un mécanisme d'embrayage selon l'une quelconque des revendications 1 à 13, **caractérisé en ce qu'**il comprend au moins les étapes suivantes :
- mise en appui axial du système de commande (300) contre la transmission (400),
- couplage en rotation de l'embrayage (100, 200) avec le système de commande (300) par insertion du support d'embrayage (500) sur une portée circonférentielle (305) du système de commande (300),
- mise en appui axial du support d'embrayage (500) contre le système de commande (300),
- blocage axial du support d'embrayage (500) sur un arbre de transmission (A1, A2) par insertion d'un anneau d'arrêt dans une gorge de l'arbre de transmission (A1, A2).

15. Procédé selon la revendication précédente, **caractérisé en ce que** l'étape de blocage axial du support d'embrayage (500) sur l'arbre de transmission comprend l'étape intermédiaire d'insertion d'une cale (700) entre le moyeu de sortie (120, 220) de l'embrayage (100, 200) et l'anneau d'arrêt de manière à réduire le jeu axial entre le support d'embrayage (500) et le système de commande (300).

## Patentansprüche

1. Kupplungsmechanismus, der dazu bestimmt ist, zwischen einem Motor und einem Antrieb eines Kraftfahrzeugs eingebaut zu werden, wobei der Mechanismus enthält:
- eine Teileinheit, die enthält:
- mindestens eine Kupplung (100, 200);
- einen Kupplungsträger (500), der eingerichtet ist, um die Kupplung radial mittels eines Wälzlagers (113) zu tragen;
- ein Steuersystem der Kupplung (300), das ein Gehäuse (307) und mindestens einen Ringkolben (320, 330) enthält, der eingerichtet ist, um sich bezüglich des Gehäuses (307) axial zu verschieben, um die Kupplung (100, 200) einzurücken oder auszurücken, wobei der Kupplungsträger (500) sich in einer axialen Zwischenstellung zwischen dem Steuersystem (300) und einer Ausgangsnabe (120, 220) des Kupplungsmechanismus befindet,
- ein axiales Blockiersystem des Steuersystems gegenüber der Kupplung, wobei das axiale Blockiersystem enthält:
- ein erstes axiales Blockierelement (304, 402), das eingerichtet ist, um mindestens ein axiales Arretieren zwischen dem Steuersystem (300) und dem Antrieb (400) durchzuführen;
- ein zweites axiales Blockierelement (600), das eingerichtet ist, um mindestens ein axiales Arretieren zwischen der Kupplung und einer Welle des Antriebs (A1, A2) durchzuführen;
**dadurch gekennzeichnet, dass** der Kupplungsträger (500) sich vom Steuersystem (300) unterscheidet, und dass der Kupplungsmechanismus eine Drehkopplungseinrichtung (303, 503) des Kupplungsträgers (500) gegenüber dem Steuersystem (300) enthält, wobei die Drehkopplungseinrichtung (303, 503) sich vom axialen Blockiersystem unterscheidet.

2. Mechanismus nach dem vorhergehenden Anspruch, **dadurch gekennzeichnet, dass** er zwei Mehrscheibenkupplungen (100, 200) enthält, wobei das Steuersystem (300) einen ersten und einen zweiten Ringkolben (320, 330) enthält, die eingerichtet sind, um die erste bzw. die zweite Kupplung (100, 200) auf einer ersten oder einer zweiten Welle des Antriebs (A1, A2) zu koppeln oder zu entkoppeln.

3. Mechanismus nach einem der Ansprüche 1 oder 2, **dadurch gekennzeichnet, dass** er einen Betätigungsträger (800) enthält, der mindestens in Drehung mit dem Gehäuse (307) des Steuersystems (300) gekoppelt ist.

4. Mechanismus nach Anspruch 3, **dadurch gekennzeichnet, dass** der Betätigungsträger (800) aus einem Stück mit dem Gehäuse (307) des Steuersystems (300) besteht.

5. Mechanismus nach Anspruch 3, **dadurch gekennzeichnet, dass** der Betätigungsträger (800) auf das Gehäuse (307) des Steuersystems (300) aufgesetzt ist.

6. Mechanismus nach Anspruch 4 oder 5, **dadurch gekennzeichnet, dass** der Kupplungsträger (500) auf einer Umfangsauflagefläche aufliegt, die auf dem Betätigungsträger (800) geformt ist und sich axial zwischen dem Ringkolben (320, 330) des Steuersystems (300) und der Ausgangsnabe (120, 220) der Kupplung (100, 200) befindet.

7. Mechanismus nach einem der vorhergehenden Ansprüche, **dadurch gekennzeichnet, dass** das zweite axiale Blockierelement (600) axial auf der Welle (A1, A2) des Antriebs (400) und auf der Ausgangsnabe (120, 220) der Kupplung (100, 200) aufliegt.

8. Mechanismus nach einem der vorhergehenden Ansprüche, **dadurch gekennzeichnet, dass** das zweite axiale Blockierelement (600) ein Element von der Art Arretierring enthält.

9. Mechanismus nach Anspruch 8, **dadurch gekennzeichnet, dass** das zweite axiale Blockierelement (600) außerdem einen Puffer (700) enthält, der axial zwischen den Arretierring und die Ausgangsnabe (120, 220) eingefügt ist.

10. Mechanismus nach einem der Ansprüche 6 bis 9, **dadurch gekennzeichnet, dass** die Drehkopplungseinrichtung (303, 503) zwischen dem Kupplungsträger und dem Steuersystem von der Art eines Keils ist.

11. Mechanismus nach einem der Ansprüche 6 bis 9, **dadurch gekennzeichnet, dass** die Drehkopplungseinrichtung (303, 503) erste Rillen (303), die sich auf der Umfangsauflagefläche (305) befinden, und zweite Rillen (503) enthält, die sich auf einer komplementären Auflagefläche des Kupplungsträgers (500) befinden.

12. Mechanismus nach Anspruch 11, **dadurch gekennzeichnet, dass** die Drehkopplungseinrichtung (303, 503) axial in einem Innenraum eines Kraftübertragungsorgans (105, 205) angeordnet ist.

13. Mechanismus nach einem der vorhergehenden Ansprüche, **dadurch gekennzeichnet, dass** das erste axiale Blockierelement (304, 402) eine Auflageseite (304) des Gehäuses (307) enthält, die sich gegenüber dem Antrieb (400) befindet.

14. Verfahren zum Zusammenbau eines Kupplungsmechanismus nach einem der Ansprüche 1 bis 13, **dadurch gekennzeichnet, dass** es mindestens die folgenden Schritte enthält:
- axiale Auflage des Steuersystems (300) gegen den Antrieb (400),
- Drehkopplung der Kupplung (100, 200) mit dem Steuersystem (300) durch Einführen des Kupplungsträgers (500) auf eine Umfangsauflagefläche (305) des Steuersystems (300),
- axiale Auflage des Kupplungsträgers (500) gegen das Steuersystem (300),
- axiale Blockierung des Kupplungsträgers (500) auf einer Antriebswelle (A1, A2) durch Einführen eines Arretierrings in eine Kehle der Antriebswelle (A1, A2).

15. Verfahren nach dem vorhergehenden Anspruch, **dadurch gekennzeichnet, dass** der Schritt der axialen Blockierung des Kupplungsträgers (500) auf der Antriebswelle den Zwischenschritt des Einführens eines Puffers (700) zwischen die Ausgangsnabe (120, 220) der Kupplung (100, 200) und den Arretierring enthält, um das axiale Spiel zwischen dem Kupplungsträger (500) und dem Steuersystem (300) zu verringern.

## Claims

1. Clutch mechanism intended to be installed between an engine and a transmission of a motor vehicle, the said mechanism comprising:
- a subassembly comprising:
- at least one clutch (100, 200);
- a clutch support (500) arranged to radially support the clutch via a rolling-contact bearing (113);
- a control system (300) for the clutch comprising a casing (307) and at least one annular piston (320, 330) arranged to move axially with respect to the casing (307) in order to engage or to release the clutch (100, 200), the clutch support (500) being situated in an axially intermediate position between the said control system (300) and an output hub (120, 220) of the clutch mechanism;
- a system for axially blocking the control system with respect to the clutch, the said axial blocking system comprising:
- a first axial blocking element (304, 402) arranged to form at least one axial stop between the control system (300) and the transmission (400);
- a second axial blocking element (600) arranged to form at least one axial stop between the clutch and a transmission shaft (A1, A2);
**characterized in that**
the said clutch support (500) is separate from the control system (300), and **in that** the clutch mechanism comprises a rotational coupling means (303, 503) for coupling the clutch support (500) with respect to the control system (300), the said rotational coupling means (303, 503) being separate from the axial blocking system.

2. Mechanism according to the preceding claim, **characterized in that** it comprises two multi-disc clutches (100, 200), the control system (300) comprising a first and a second annular piston (320, 330) which are respectively arranged to couple or uncouple the first and the second clutch (100, 200) to or from a first or a second transmission shaft (A1, A2).

3. Mechanism according to either one of Claims 1 and 2, **characterized in that** it comprises an actuating support (800) at least coupled in rotation with the casing (307) of the control system (300).

4. Mechanism according to Claim 3, **characterized in that** the actuating support (800) is formed integrally with the casing (307) of the control system (300).

5. Mechanism according to Claim 3, **characterized in that** the actuating support (800) is added onto the casing (307) of the control system (300).

6. Mechanism according to Claim 4 or 5, **characterized in that** the clutch support (500) bears on a circumferential bearing surface formed on the actuating support (800) and situated axially between the annular piston (320, 330) of the control system (300) and the output hub (120, 220) of the clutch (100, 200).

7. Mechanism according to any one of the preceding claims, **characterized in that** the second axial blocking element (600) bears axially on the shaft (A1, A2) of the transmission (400) and on the output hub (120, 220) of the clutch (100, 200).

8. Mechanism according to any one of the preceding claims, **characterized in that** the second axial blocking element (600) comprises an element of the stop ring type.

9. Mechanism according to Claim 8, **characterized in that** the second axial blocking element (600) additionally comprises a shim (700) interposed axially between the stop ring and the output hub (120, 220).

10. Mechanism according to any one of Claims 6 to 9, **characterized in that** the rotational coupling means (303, 503) between the clutch support and the control system is of the wedge type.

11. Mechanism according to any one of Claims 6 to 9, **characterized in that** the rotational coupling means (303, 503) comprises first splines (303) situated on the circumferential bearing surface (305) and second splines (503) situated on a complementary bearing surface of the clutch support (500).

12. Mechanism according to Claim 11, **characterized in that** the rotational coupling means (303, 503) is arranged axially in an interior space of a force transmission member (105, 205).

13. Mechanism according to any one of the preceding claims, **characterized in that** the first axial blocking element (304, 402) comprises a bearing face (304) of the casing (307) situated facing the transmission (400).

14. Method for assembling a clutch mechanism according to any one of Claims 1 to 13, **characterized in that** it comprises at least the following steps:
- placing the control system (300) such that it bears axially against the transmission (400),
- rotationally coupling the clutch (100, 200) with the control system (300) by insertion of the clutch support (500) on a circumferential bearing surface (305) of the control system (300),
- placing the clutch support (500) such that bears axially against the control system (300),
- axially blocking the clutch support (500) on a transmission shaft (A1, A2) by inserting a stop ring into a groove of the transmission shaft (A1, A2) .

15. Method according to the preceding claim, **characterized in that** the step of axially blocking the clutch support (500) on the transmission shaft comprises the intermediate step of inserting a shim (700) between the output hub (120, 220) of the clutch (100, 200) and the stop ring so as to reduce the axial clearance between the clutch support (500) and the control system (300).
